(19) Europäisches Patentamt
European Patent Office
Office européen des brevets

(11) **EP 2 618 958 B1**

(12) **EUROPÄISCHE PATENTSCHRIFT**

(45) Veröffentlichungstag und Bekanntmachung des Hinweises auf die Patenterteilung:
**18.01.2017 Patentblatt 2017/03**

(21) Anmeldenummer: **10763610.2**

(22) Anmeldetag: **24.09.2010**

(51) Int Cl.:
***B23K 26/03*** *(2006.01)*

(86) Internationale Anmeldenummer:
**PCT/EP2010/005861**

(87) Internationale Veröffentlichungsnummer:
**WO 2012/037955 (29.03.2012 Gazette 2012/13)**

(54) **NUTZUNG DER POLARISATION DER WÄRMESTRAHLUNG ZUR DETEKTION VON 3D-STRUKTUREN**

USE OF THE POLARITY OF A THERMAL EMISSION FOR THE DETECTION OF 3D-STRUCTURES

UTILISATION DE LA POLARITÉ D'UNE ÉMISSION THERMIQUE POUR LA DÉTECTION D'UNE SURFACE TRI-DIMENSIONNELLE.

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**31.07.2013 Patentblatt 2013/31**

(73) Patentinhaber: **Universität Stuttgart**
**70174 Stuttgart (DE)**

(72) Erfinder:
• **BERGER, Peter**
**1254 Ditzingen (DE)**
• **WEBERPALS, Jan-Philipp**
**74232 Abstatt (DE)**

• **ABT, Felix**
**73098 Rechberghausen (DE)**
• **GRAF, Thomas**
**71154 Nufringen (DE)**

(74) Vertreter: **Müller-Boré & Partner**
**Patentanwälte PartG mbB**
**Friedenheimer Brücke 21**
**80639 München (DE)**

(56) Entgegenhaltungen:
**WO-A1-2007/053973    WO-A1-2008/028580**
**DE-A1- 19 716 293    JP-A- 2003 181 662**
**US-A- 5 969 374**

EP 2 618 958 B1

## Beschreibung

Die vorliegende Erfindung betrifft ein Verfahren und eine Vorrichtung zur Überwachung bzw. Kontrolle einer Bearbeitung, insbesondere einer Laserbearbeitung, eines Werkstücks.

Vor allem thermische Bearbeitungsverfahren finden in der Materialverarbeitung in vielerlei Varianten Anwendung. Neben klassischen Schweißverfahren finden heutzutage vor allem Lasersysteme immer mehr Eingang in eine schnelle, präzise und automatisierte Materialbearbeitung. Beispielsweise im Rahmen von Laserschweißverfahren, Laserschneideverfahren und Laserbohrverfahren haben sich fokussierte Laser in vielen Industriezweigen aufgrund ihrer besonders hohen Präzision und Qualität durchgesetzt. Dabei wird mittels eines fokussierten Laserstrahls ein Werkstück lokal sehr stark erhitzt und dabei zum Schmelzen oder sogar zum Verdampfen gebracht.

Gerade die Automatisierung solcher thermischer Bearbeitungsverfahren stellt hohe Anforderungen an eine Überwachung und Kontrolle der Bearbeitungsqualität. Thermische Prozesse basieren oft auch auf nicht-linearen physikalischen Vorgängen, deren Ablauf beispielsweise durch kleine Inhomogenitäten in der Materialstruktur oder -zusammensetzung oder durch kleine Schwankungen der Prozessparameter stark beeinflusst werden. Solche nicht-linearen physikalischen Vorgänge werden beispielsweise durch leichte lokale Schwankungen der thermischen Leitfähigkeit (z.B. aufgrund von Mikrorissen im Werkstück) verursacht: Das resultierende Ergebnis der thermischen Bearbeitung des betreffenden Werkstücks kann dabei allerdings wesentliche Qualitätseinbußen erleiden. Beispielsweise bestimmt die Geometrie einer Schweißnaht maßgeblich die Qualität und damit die Festigkeit einer Schweißverbindung. Kerben und Vertiefungen können die Festigkeit wesentlich vermindern. Sie können bei der Bearbeitung, also dem Schweißen, beispielsweise durch kleine Inhomogenität des Ausgangsmaterials oder durch kleine Schwankungen der Umgebungsbedingungen verursacht werden und sind daher nur schwer zu vermeiden. Eine zuverlässige Überprüfung der thermischen Bearbeitungsverfahren ist daher von entscheidender Bedeutung für die Qualitätssicherung.

Vor allem bei der thermischen Bearbeitung entstehende Vertiefungen sind jedoch mit herkömmlichen Untersuchungs- und Überwachungsmethoden nur schwer oder nur sehr aufwendig zu entdecken oder zu analysieren. So werden bisher zwar bereits Videoaufnahmen von prozessierten Bereichen angefertigt und Unregelmäßigkeiten optisch beurteilt. Vor allem zur Online-Überwachung beispielsweise von Schweißnähten werden solche Videoaufnahmen oft mit Lichtschnitt-Systemen kombiniert. Kanten werden durch Schattenwurf bei schrägem Lichteinfall erkannt. Auch andere Verfahren, wie Streifenprojektion, können genutzt werden.

Insbesondere Vertiefungen können dabei jedoch oft nur schwer entdeckt oder bewertet werden, da sie dunkel erscheinen und ihre innere Struktur in diesen Aufnahmeverfahren kaum aufgelöst werden kann. Außerdem erfordern diese Verfahren in der Regel eine eigene Lichtquelle, weshalb diese Verfahren nicht oder nur bedingt koaxial zum Laserstrahl eingesetzt werden können. Damit sind sie beispielsweise für das neuerdings häufig praktizierte Scanner-Schweißen relativ schlecht geeignet.

Die WO-2008/028580 offenbart eine Vorrichtung zum Laserschweißen, wobei koaxial zum Laserstrahl durch die Laseroptik hindurch der Schweißbereich abgebildet wird, und sowohl eine Triangulationslinie und ein Grau- oder Farbbild der erstarrten Schweißnaht als auch das Prozessleuchten des Schweißprozesses aufgenommen wird. Aus der Graubildaufnahme wird eine Rauigkeit der Schweißnaht erkannt.

Eine Aufgabe der Erfindung liegt somit darin, eine verbesserte Überwachung oder Kontrolle der Qualität einer, insbesondere lokalen, thermischen Bearbeitung von Werkstücken zu erzielen. Diese Aufgabe wird durch ein Verfahren und eine Vorrichtung mit den in den unabhängigen Ansprüchen angegebenen Merkmalen gelöst. Bevorzugte Ausführungsformen sind Gegenstand der abhängigen Ansprüche.

Somit bietet die Erfindung insbesondere ein Verfahren zur Überwachung bzw.

Überprüfung bzw. Kontrolle einer Bearbeitung eines Werkstücks, umfassend:

- Erfassen einer ersten Strahlungskomponente einer von zumindest einem Flächenelement in einem Bearbeitungsbereich des Werkstückes emittierten Wärmestrahlung mit einer ersten Polarisation der Wärmestrahlung;
- Erfassen zumindest einer zweiten Strahlungskomponente einer von dem zumindest einen Flächenelement in dem Bearbeitungsbereich des Werkstückes emittierten Wärmestrahlung mit einer zweiten, von der ersten verschiedenen Polarisation der Wärmestrahlung; und
- Ermitteln von Datenwerten einer Oberflächenstruktur des Werkstückes an dem zumindest einen Flächenelement aus der erfassten ersten und zweiten Strahlungskomponente.

In bevorzugten Ausführungsformen können in analoger Weise auch weitere, also mehr als zwei, Strahlungskomponenten mit zumindest teilweise verschiedenen Polarisationen erfasst werden. Die Erfindung macht sich damit einen Effekt zunutze, wonach die Winkelabhängigkeit der thermischen Abstrahlung polarisationsabhängig ist. Die für die beiden Polarisationen erhaltenen Informationen werden analysiert und zueinander in Beziehung gesetzt. Diese Beziehung der erfassten Strahlungskomponenten mit den beiden verschiedenen Polarisationen stellt somit ein Maß für den Abstrahlwinkel der erfassten Wärmestrahlung in dem beobachteten Flächenelement, also ein Maß für einen Neigungswinkel des beobachteten Flächenelements relativ zur Erfassungsrichtung der Wärmestrahlung dar. Gerade die mit Strukturabweichungen der Oberfläche verbundenen Fehler bei der Bearbeitung des Werkstückes können auf diese Weise zuverlässig aufgefunden werden. Insbesondere lassen sich damit zuverlässig beispielsweise Nahtfehler beim Schweißen (z.B. Laser-Schweißen) und Neigungen der Nahtoberraupe oder Kapillare beim Lasertiefschweißen sowie die Schnittfront beim Laserschneiden analysieren.

Zwar wäre es unter Umständen sogar denkbar, aus nur einer der beiden Polarisationen allein betrachtet bereits Informationen über den Abstrahlwinkel zu erhalten. Allerdings müssten hierfür in der Regel zusätzliche Annahmen getroffen werden oder zusätzlich Messungen weiterer Parameter, wie z.B. der absoluten Temperatur, vorgenommen werden, um verlässliche Aussagen über tatsächliche, unerwünschte Strukturabweichungen treffen zu können. Im Rahmen der vorliegenden Erfindung wurde hingegen erkannt, dass durch die Erfassung der Wärmestrahlung mit zwei verschiedenen Polarisationen eine sehr zuverlässige und vergleichsweise störungsunempfindliche Analyse unerwünschter Strukturabweichungen möglich ist.

Ein wesentlicher Vorteil einer erfindungsgemäßen Nutzung von Wärmestrahlung zur Überwachung von Bearbeitungsprozessen gegenüber herkömmlichen Videoüberwachungen besteht beispielsweise darin, dass vor allem auch aus den bei der Bearbeitung entstehenden Löchern und Vertiefungen, welche mit herkömmlichen Videoüberwachungen kaum analysiert werden konnten, relativ viel Wärmestrahlung im Verhältnis zur Werkstückoberfläche emittiert wird. Darin zeichnen sich vor allem thermische Bearbeitungsprozesse aus. Obwohl sich das erfindungsgemäße Verfahren grundsätzlich für die Überwachung verschiedenster Bearbeitungsverfahren eignet, in denen es zumindest temporär zu einer Veränderung bzw. Beeinflussung einer Oberfläche kommt oder kommen kann, zeigt es seine Stärken in besonderer Weise für thermische Bearbeitungsverfahren, insbesondere solchen Verfahren, die auf einer lokalen thermischen Behandlung des Werkstücks beruhen. Diese Prozesse lassen sich durch das erfindungsgemäße Verfahren in besonders effizienter Weise "In situ" überwachen, d.h. die Überwachung kann In besonders effizienter Weise bereits während des Bearbeitungsprozesses erfolgen, da der Bearbeitungsbereich in diesem Fall durch den Bearbeitungsprozess selbst bereits auf eine erhöhte Temperatur gebracht ist und damit ausreichend Wärmestrahlung emittiert. Das Verfahren umfasst in diesem Fall somit ein insbesondere lokales Erwärmen bzw. Aufheizen des Werkstücks im Bearbeitungsbereich.

Als besonders bevorzugte Anwendungsgebiete des erfindungsgemäßen Verfahrens eignen sich beispielsweise Laser-Schweißen, Laser-Schneiden und Laser-Bohren. Das Verfahren umfasst darin ein lokales Aufheizen des Werkstücks insbesondere durch Bestrahlen des Werkstücks mit Laserlicht im Bearbeitungsbereich. Dazu wird insbesondere ein Laserstrahl, vorzugsweise ein fokussierter Laserstrahl auf das Werkstück gelenkt. Das lokale Erwärmen bzw. Aufheizen des Werkstücks mittels Laserlicht findet somit während und aufgrund der Laserbearbeitung statt.

Die mittels der Erfindung gewonnenen Erkenntnisse über die Oberflächenstruktur können auf verschiedene Weise vorteilhaft genutzt werden. Einerseits können die Erkenntnisse über die Oberflächenstruktur direkt genutzt werden, insbesondere um unerwünschte Abweichungen zu erkennen. Andererseits können die Erkenntnisse über die Oberflächenneigung für eine verbesserte Temperaturmessung berücksichtigt werden, wie später noch genauer ausgeführt wird.

In einer bevorzugten Ausführungsform umfasst das Ermitteln von Datenwerten einer Oberflächenstruktur somit ein Überprüfen einer Abweichung der erfassten Wärmestrahlung von Sollvorgaben, wobei die Sollvorgaben Sollwerte für zumindest eine Beziehung der ersten und zweiten Strahlungskomponente festlegen. Zur Überprüfung einer Abweichung der erfassten Wärmestrahlung von Sollvorgaben werden die Sollvorgaben vorzugsweise in Form von Datenwerten in einer Datenbank hinterlegt. Diese Datenwerte können dann insbesondere automatisch, also computerimplementiert, mit der ausgewerteten Beziehung der erfassten Strahlungskomponenten verglichen werden. Insbesondere können Datenwerte für zulässige Neigungen und/oder Neigungsabweichungen des zumindest einen Flächenelements hinterlegt werden. Aus den erfassten Strahlungskomponenten wird dann vorzugsweise ein tatsächlicher Neigungswinkel ermittelt, welcher dann zumindest teilweise auf die Einhaltung der Vorgaben überprüft wird.

Alternativ oder zusätzlich können auch bereits die für solche Neigungen und/oder Neigungsabweichungen des zumindest einen Flächenelements erwarteten Beziehungen der zu erfassenden Strahlungskomponenten als Sollvorgaben bereitgestellt werden. Beispielsweise könnte der für eine bei einer fehlerfreien Bearbeitung maximal zulässige Neigung des Flächenelements erwartete Wert der Beziehung der beiden Strahlungskomponenten als Sollwert hinterlegt und dann mit dem ermittelten Wert verglichen werden.

Als Beziehung der beiden Strahlungskomponenten kann dabei im Prinzip jede insbesondere mathematisch beschreibbäre Beziehung ermittelter physikalischer Werte der Strahlungskomponenten genutzt werden, die der unterschiedlichen Winkelabhängigkeit der Strahlungskomponenten besonders gerecht wird. Besonders bevorzugt dient als Beziehung der Strahlungskomponenten eine Differenz oder ein Quotient der Strahlungsleistungen und/oder Strahlungsdichten und/oder Emissivitäten (Werte des Emissionskoeffizienten) für die beiden Polarisationen. Das Ermitteln von Datenwerten einer Oberflächenstruktur des Werkstückes, insbesondere das Überprüfen einer Abweichung von Sollvorgaben, umfasst somit vorzugsweise ein Bestimmen einer Differenz und/oder eines Quotienten von erfassten Werten der ersten und zweiten Strahlungskomponete.

Vorzugsweise ist die erste und/oder die zweite optische Polarisation eine lineare Polarisation. Insbesondere lineare Polarisationen parallel und senkrecht zur Abstrahlebene weisen einen besonders deutlichen Unterschied in ihrer Winkelabhängigkeit auf. Dabei ist es besonders bevorzugt, wenn die erste und zweite optische Polarisation orthogonal zueinander sind. Damit erreicht man eine besondere gute Diskriminierung zwischen den verschiedenen Winkelabhängigkeiten.

Vorzugsweise erfolgt das Erfassen der ersten und zweiten Strahlungskomponente für eine Vielzahl von Flächenelementen im Bearbeitungsbereich ortsaufgelöst. Insbesondere wird dabei mittels eines Kamerasystems ein zwei-dimensionales Bild zumindest eines Teils des Bearbeitungsbereichs erfasst. Besonders bevorzugt umfasst eine erfindungsgemäße Vorrichtung eine Anzeigeeinrichtung, in der die erfassten Bilder für die erste und/oder zweite Strahlungskomponente dargestellt werden kann. Besonders bevorzugt wird die vorgegebene Beziehung der beiden Strahlungskomponenten, insbesondere deren Differenz bzw. deren Quotient angezeigt.

Vorzugsweise umfasst das Ermitteln von Datenwerten einer Oberflächenstruktur des Werkstückes, insbesondere das Überprüfen einer Abweichung der erfassten Wärmestrahlung von Sollvorgaben, ein Überprüfen des Überschreitens einer durch die Sollvorgaben bestimmten räumlichen Veränderung für die zumindest eine Beziehung der ersten und zweiten Strahlungskomponente. Insbesondere kann eine starke Änderung der thermischen Abstrahlcharakteristik auf sehr kurzer Distanz, insbesondere eine stufenartige Änderung, auf einen Strukturdefekt, wie z.B. Kerben, Vertiefungen, offene Poren, einen Nahteinfall, oder eventuell sogar einen Bruch oder Riss, hinweisen.

Besonders bevorzugt werden die erste und zweite Strahlungskomponente wiederholt (mehrmals nacheinander), vorzugsweise kontinuierlich oder quasikontinuierlich (also in schneller Folge aufeinander), erfasst. Dabei umfasst das Überprüfen einer Abweichung der erfassten Wärmestrahlung von Sollvorgaben vorzugsweise ein Überprüfen des Überschreitens einer durch die Sollvorgaben bestimmten zeitlichen Veränderung für die zumindest eine Beziehung der ersten und zweiten Strahlungskomponente. Insbesondere kann eine starke Änderung der thermischen Abstrahlcharakteristik innerhalb kurzer Zeit auf einen während der Bearbeitung auftretenden Strukturdefekt, wie z.B. Kerben, Vertiefungen, offene Poren, einen Nahteinfall, oder eventuell sogar einen Bruch oder Riss, hinweisen.

In einer weiteren bevorzugten Ausführungsform umfasst das Verfahren außerdem ein Bestrahlen des Werkstücks mit Laserlicht zur Bearbeitung des Werkstücks im Bearbeltungsbereich, wobei die erste und zweite Strahlungskomponente derart erfasst werden, dass sie koaxial zum eingestrahlten Laserlicht vom Bearbeitungsbereich abgestrahlt werden. Vorzugsweise wird also die koaxial mit zum eingestrahlten Laserlicht abgestrahlte Wärmestrahlung erfasst, es werden die Anteile der Wärmestrahlung als erste und zweite Strahlungskomponente erfasst, die koaxial zum eingestrahlten Laserlicht vom Bearbeitungsbereich abgestrahlt werden. Dies ist besonders vorteilhaft für in-situ-Überwachung während einer Laserbearbeitung, welche insbesondere auch in die Tiefe des Werkstückes wirkt (z.B. Schneiden, Bohren, Tiefenschweißen).

Vorzugsweise umfasst die Bearbeitung des Werkstücks eine Laserbearbeitung (also eine Bearbeitung mittels eines Laserstrahls). Dabei umfasst die Laserbearbeitung in einer bevorzugten Ausführungsform eine Bewegung eines Laserstrahls relativ zum Werkstück in einer ersten Bewegungsrichtung parallel zu einer Werkstückoberfläche. Insbesondere bewegt sich ein Laserstrahl in einer Bewegungsrichtung parallel zu einer Werkstückoberfläche, auf die der Laserstrahl für die Laserbearbeitung trifft. Vorzugsweise liegt dabei die erste optische Polarisation parallel zur ersten Bewegungsrichtung und die zweite optische Polarisation senkrecht zur ersten Bewegungsrichtung. Gerade bei einer Bewegung des Laserstrahl während der Bearbeitung treten temporär. Bearbeitungsflächen auf, deren Neigung relativ zur Bewegungsrichtung und senkrecht dazu charakteristisch sind für die Qualität des Bearbeitungsprozesses. Daher können mit der vorgeschlagenen Polarisation besonders wirksam Qualitätsüberprüfungen "in situ" stattfinden.

In einer besonders bevorzugten Ausführungsform wird insbesondere analog zur ersten und zweiten Strahlungskomponente zumindest auch noch eine dritte und besonders bevorzugt sogar eine vierte Strahlungskomponente erfasst, welche eine jeweils von der ersten und zweiten Polarisation verschiedene dritte bzw. vierte Polarisation aufweisen. Besonders bevorzugt liegen die erste und zweite Polarisation als lineare Polarisationen senkrecht zueinander, während die dritte und gegebenenfalls die vierte Polarisationen besonders bevorzugt jeweils in einem Winkel von 45° zur ersten und zweiten Polarisation und gegebenenfalls senkrecht zueinander stehen. Damit lassen sich verschiedene Neigungsrichtungen der Oberfläche sehr gut unterscheiden. Definiert man eine Ebene $E_1$ durch die Ausbreitungsrichtung der erfassten Wärmestrahlung und die Richtung der ersten Polarisation (bei linearer Polarisation) und eine Ebene $E_2$ analog für die Richtung der zweiten Polarisation, so erbringen geneigte Oberflächenelemente, deren Normalenvektor in einer Mittenebene zwischen $E_1$ und $E_2$ liegt, das gleiche Messsignal für die erste und zweite Strahlungskomponente. Ohne weitere Informationen ist in diesem Fall eine genaue Neigung nicht eindeutig beispielsweise aus der Differenz oder dem Quotienten, also insbesondere aus dem Vergleich der beiden Signale, zu bestimmen. Dies Ist zwar für die Fehlererkennung meist nicht notwendig, kann aber durch Berücksichtigung einer dritten und weiter bevorzugt sogar einer vierten Strahlungskomponente in vorteilhafter Weise dennoch bewerkstelligt werden.

Vorzugsweise liegt die bei einer Laserbearbeitung verwendete Laser-Wellenlänge in einem Bereich von etwa 100 nm bis etwa 11 $\mu$m, besonders bevorzugt in einem Bereich von etwa 300 nm bis etwa 11 $\mu$m.

Die erfassten Strahlungskomponenten für zumindest eine Wellenlänge liegen vorzugsweise in einem Bereich von etwa 300 nm bis etwa 12 $\mu$m, vorzugsweise in einem Bereich von etwa 300 nm bis etwa 5 $\mu$m, noch mehr bevorzugt in einem Bereich von etwa 1 $\mu$m bis etwa 3 $\mu$m.

In einem weiteren Aspekt ist die erfindungsgemäße Nutzung von Erkenntnissen über Oberflächenstrukturen aus dem Vergleich der Wärmestrahlungen verschiedener Polarisation auch sehr vorteilhaft für eine verbesserte Messung einer Temperatur des Werkstücks einsetzbar. Dies kann wiederum für eine verbesserte Überwachung einer Bearbeitung des Werkstückes genutzt werden. Dabei umfasst das Ermitteln von Datenwerten einer Oberflächenstruktur vorzugsweise ein Ermitteln eines Abstrahlwinkels der erfassten Strahlungskomponenten in dem zumindest einen Flächenelement. Vorzugsweise werden für das zumindest eine Flächenelement des Werkstückes Strahlungskomponenten bei zumindest zwei verschiedenen Wellenlängen aber gleicher (bzw. ohne) Polarisation erfasst. Dabei umfasst das Verfahren vorzugsweise außerdem ein Ermitteln einer Temperatur und/oder eines Emissionskoeffizienten für das zumindest eine Flächenelement aus den bei zumindest zwei verschiedenen Wellenlängen erfassen Strahlungskomponenten unter Berücksichtigung des ermittelten Abstrahlwinkels.

So ist in einer besonders bevorzugten Ausführungsform vorgesehen, dass für das zumindest eine, oder für jedes von einem Detektorsystem erfasste Flächenelement aus der erfassten Strahlung bei den verschiedenen Wellenlängen eine Temperatur, insbesondere eine Absoluttemperatur und/oder ein Emissionskoeffizient ermittelt werden. Das Ermitteln der Absoluttemperatur und des Emissionskoeffizienten aus der bei zumindest zwei Wellenlängen gemessenen Strahlung kann durch an sich bekannte Verfahren der Verhältnisstrahlungspyrometrie und/oder durch eine analytische Anpassung der elektromagnetischen Strahlung an physikalische Strahlungsgesetze erfolgen. Hierzu wird die Strahlung beispielsweise jedes erfassten Flächenelements auf dem Werkstück mittels einer analytischen Trennung in eine Absoluttemperatur und in einen Emissionskoeffizienten umgerechnet.

Nachdem die Wärmestrahlung aber grundsätzlich winkelabhängig ist, ist ohne Kenntnis eines Abstrahlungswinkels die Ermittlung der Temperatur aus der gemessenen Wärmestrahlung in herkömmlicher Weise vor allem für große Winkel relativ zur Flächennormale der abstrahlenden Fläche nur sehr ungenau möglich. Durch die vorliegende Erfindung wird aber eine Möglichkeit geschaffen, diesen Abstrahlwinkel recht genau aus den erfassten Strahlungskomponenten unterschiedlicher Polarisation zu ermitteln. Dabei wurde erkannt, dass der Unterschied bzw. das Verhältnis der Winkelabhängigkeiten für verschiedene Polarisationen zumindest meist nur sehr schwach von der Temperatur abhängt. Dies gilt insbesondere in einem Wellenlängenbereich der Wärmestrahlung von etwa 1 $\mu$m bis etwa 3 $\mu$m. Der Abstrahlwinkel kann somit bereits ohne Kenntnis der absoluten Temperatur mit hoher Genauigkeit ermittelt werden, um anschließend mit Kenntnis und unter Berücksichtigung des Abstrahlwinkels die Temperatur viel zuverlässiger und genauer ermitteln zu können.

Die Ermittlung von Strahlungskomponenten bei zumindest zwei verschiedenen Wellenlängen kann dabei auf unterschiedliche Weise erfolgen. In einer beispielhaften Ausführungsform erfolgt das Erfassen der ersten und zweiten Strahlungskomponente bei zumindest einer ersten Wellenlänge der Wärmestrahlung, während das Verfahren außerdem ein Erfassen einer dritten Strahlungskomponente einer von dem zumindest einen Flächenelement in dem Bearbeitungsbereich des Werkstückes emittierten Wärmestrahlung mit der ersten oder zweiten Polarisation der Wärmestrahlung bei zumindest einer zweiten Wellenlänge der Wärmestrahlung umfasst, welche sich von der ersten Wellenlänge unterscheidet. Aus den Strahlungskomponenten unterschiedlicher Wellenlänge aber gleicher Polarisation wird dann die Temperatur und/oder der Emissionskoeffizient für das zumindest eine Flächenelement ermittelt. Alternativ können die beiden Strahlungskomponenten unterschiedlicher Wellenlänge auch ohne Polarisation erfasst werden. In jedem Fall ist es vorteilhaft, wenn die Strahlungskomponenten unterschiedlicher. Polarisation und die Strahlungskomponenten unterschiedlicher Wellenlänge koaxial bzw. unter dem selbem Abstrahlwinkel erfasst werden. Damit kann der aus den unterschiedlichen Polarisationen erhaltene Abstrahlwinkel direkt für die Temperaturbestimmung eingesetzt werden.

In einem weiteren Aspekt bietet die Erfindung eine Vorrichtung zur Überwachung einer Bearbeitung eines Werkstücks, umfassend:

- ein Detektorsystem zur separaten Erfassung einer ersten Strahlungskomponente einer von zumindest einem Flächenelement in einem Bearbeitungsbereich des Werkstückes emittierten Wärmestrahlung mit einer ersten Polarisation der Wärmestrahlung und einer zweiten Strahlungskomponente einer von dem zumindest einen Flächenelement in dem Bearbeitungsbereich des Werkstückes emittierten Wärmestrahlung mit einer von der ersten verschiedenen, zweiten Polarisationen der Wärmestrahlung; und
- ein Analysesystem zum Ermitteln von Datenwerten einer Oberflächenstruktur des Werkstücks an dem zumindest einen Flächenelement aus der erfassten ersten und zweiten Strahlungskomponente.

Vorzugsweise ist die erfindungemäße Vorrichtung ausgelegt, ein Verfahren gemäß der Erfindung, insbesondere in einer der beschriebenen bevorzugten Ausführungsformen auszuführen.

Vorzugsweise ist das Analysesystem ausgelegt, automatisch eine Abweichung der erfassten Wärmestrahlung von Sollvorgaben zu überprüfen, wobei die Sollvorgaben Sollwerte für die zumindest eine Beziehung der ersten und zweiten Strahlungskomponente festlegen. Dazu umfasst das Analysesystem vorzugsweise einen Datenspeicher zum Speichern der Sollvorgaben.

In einer weiteren bevorzugten Ausführungsform ist das Analysesystem ausgelegt, aus der erfassten ersten und zweiten Strahlungskomponente einen Abstrahlwinkel der erfassten Strahlungskomponenten in dem zumindest einen Flächenelement zu ermitteln. Vorzugsweise ist das Detektorsystem ausgelegt, für das zumindest eine Flächenelement des Werkstückes Strahlungskomponenten bei zumindest zwei verschiedenen Wellenlängen zu erfassen, und das Analysesystem ist dabei besonders bevorzugt außerdem ausgelegt, aus den bei zumindest zwei verschiedenen Wellenlängen erfassen Strahlungskomponenten unter Berücksichtigung des ermittelten Abstrahlwinkels eine Temperatur und/oder einen Emissionskoeffizient für das zumindest eine Flächenelement zu ermitteln.

In einer weiteren bevorzugten Ausführungsform umfasst die Vorrichtung eine Einkoppeloptik zum Einkoppeln eines Laserstrahls in den Strahlengang des Detektorsystems für die Bearbeitung des Werkstückes derart, dass der Laserstrahl koaxial mit den vom Werkstück abgestrahlten und vom Detektorsystem erfassten Komponenten der Wärmestrahlung auf das Werkstück trifft. Dazu umfasst die Einkoppeloptik vorzugsweise einen dichroitischen Spiegel, der nur entweder für das Laserlicht oder für die Wärmestrahlung als Spiegel fungiert, während er für die andere Strahlung durchlässig ist. Besonders bevorzugt umfasst die Vorrichtung außerdem eine Scan-Einheit, mit welche der Laserstrahl für die Laserbearbeitung (z.B. Laserschweißen, Laserschneiden, Laserbohren) relativ zum Werkstück bewegt werden kann.

In einer weiteren bevorzugten Ausführungsform umfasst das Detektorsystem zumindest einen ersten Bandpassfilter. Damit kann erreicht werden, dass die erfassten Strahlungskomponenten in einem bestimmten Wellenlängenbereich liegen. Besonders bevorzugt umfasst das Detektorsystem einen polarisierenden Strahlteiler. Damit lässt sich die vom Werkstück abgestrahlte Wärmestrahlung in die verschiedenen Strahlungskomponenten unterschiedlicher Polarisation aufspalten.

Vorzugsweise umfasst das Detektorsystem zumindest eine Matrix-Kamera (beispielsweise eine CCD-Kamera), welche ausgelegt ist, die erste und/oder zweite Strahlungskomponente für eine Vielzahl von Flächenelementen im Bearbeitungsbereich ortsaufgelöst zu erfassen. Dabei kann entweder eine Kamera vorgesehen sein, die geeignet ist die Strahlungskomponenten beider Polarisationen entweder nebeneinander bzw. übereinander und/oder nacheinander und/oder ineinander geschachtelt zu erfassen. Letztes könnte derart erfolgen, dass benachbarte Pixel der Kamera beispielsweise durch Vorschalten geeigneter Filter abwechselnd für die eine oder die andere der beiden verschiedenen Polarisationen empfänglich sind. Alternativ könnten auch zumindest zwei Kameras vorgesehen sein, von denen jede ein der zumindest zwei polarisierten Strahlungskomponenten erfasst. Besonders bevorzugt umfasst das Detektorsystem, insbesondere zumindest eine Matrix-Kamera, InGaAs-Sensoren. Diese eignen sich besonders für Wellenlänge im µm-Bereich der technologisch relevanten Wärmestrahlung.

Vorzugsweise umfasst das Detektorsystem einen Polarisationsfilter, der zwischen den zumindest zwei verschiedenen Polarisationen umschaltbar ist. Insbesondere kann der schaltbare Polarisationsfilter als drehendes, segmetiertes Filterrad mit unterschiedlicher Polarisation einzelner Segmente oder als elektrooptischer Schalter oder als magnetooptischer Schalter ausgestaltet sein.

Die Erfindung wird nachfolgend mit Bezug auf begleitende Zeichnungen bevorzugter Ausführungsformen beispielhaft beschrieben. Dabei zeigen:

Fig. 1: eine schematische Darstellung einer erfindungsgemäßen Vorrichtung in einer bevorzugten Ausführungsform;

Fig. 2: eine schematische Darstellung einer erfindungsgemäßen Vorrichtung in einer weiteren bevorzugten Ausführungsform;

Fig. 3: Winkelabhängigkeiten der Wärmestrahlung für verschiedene Temperaturen und verschiedene Wellenlängen;

Fig. 4: Winkelabhängigkeiten des Quotienten zweier Strahlungskomponenten unterschiedlicher Polarisation für Stahl (Fe) und Aluminium (Al); und

Fig. 5A und 5B: Bilddatensätze für Strahlungskomponenten verschiedener Polarisation während einer Laserbearbeitung eines Werkstücks.

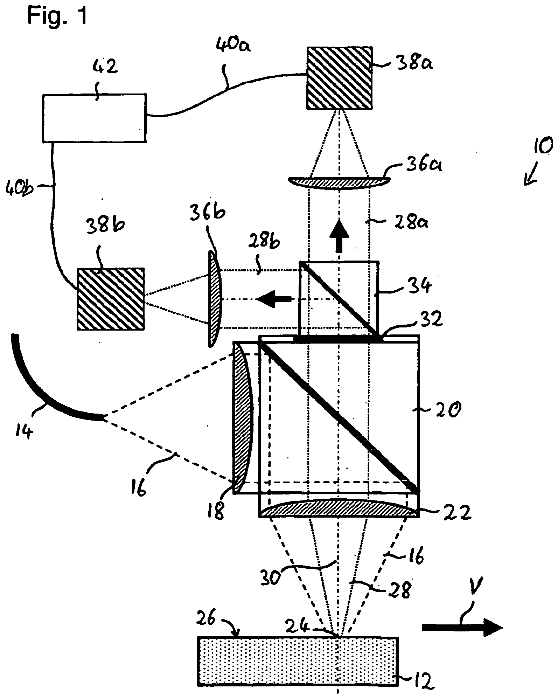

Fig. 1 zeigt eine schematische Darstellung einer Vorrichtung 10 zur Überwachung einer Laserbearbeitung eines Werkstücks 12 gemäß einer bevorzugten Ausführungsform der Erfindung. Insbesondere ist diese Vorrichtung 10 ausgelegt, das Werkstück 12 mittels Laserlicht zu schneiden und/oder zu schweißen und/oder zu bohren. Das Laserlicht wird in dieser dargestellten Ausführungsform über eine optische Faser bzw. Glasfaser 14 bereitgestellt, in der Laserlicht 16 geführt wird. Nach dem Austreten des Laserlichts 16 aus der optischen Faser 14 wird das Licht mittels einer Kollimatorlinse 18 konditioniert, bevor es über einen Strahlteiler 20 umgelenkt und über eine Fokussieroptik, insbesondere eine Fokussierlinse 22, in einem Bearbeitungsbereich 24 des Werkstücks auf eine Werkstückoberfläche 26 gelenkt wird. Je nach Art der Bearbeitung wird die Vorrichtung 10 bzw. der Laserstrahl 16 relativ zum Werkstück 12 zumindest für eine kurze Zeit im Wesentlichen fixiert, also an einer konstanten Position gehalten (z.B. zum Laser-Bohren oder Laser-Schweißen) oder der Laserstrahl 16 wird insbesondere kontinuierlich relativ zum Werkstück 12 in einer Bewegungsrichtung V bewegt (z.B. zum Laser-Scheiden oder zum Laser-Schweißen).

Durch die Laserbehandlung wird das Werkstück im Bearbeitungsbereich 24 lokal erhitzt. Dadurch wird vom Bearbeitungsbereich 24 des Werkstücks 12 Wärmestrahlung abgegeben, die erfindungsgemäß zumindest teilweise erfasst wird. In der in Fig. 1 dargestellten bevorzugten Ausführungsform wird Wärmestrahlung 28 koaxial, also aus der selben Strahlungsrichtung bzw. entlang der selben optischen Achse 30, zum eingestrahlten Laserlicht 16 wieder über die Fokussierlinse 22 eingefangen bzw. erfasst. Sie passiert den Strahlteiler 20, bevor sie auf einen Band-Pass-Filter 32 trifft. Als Strahlteiler 20 wird dabei insbesondere ein geeigneter dichroitischer Spiegel verwendet, der das Laserlicht 16 reflektiert, während er die Wärmestrahlung 28 insbesondere der vom Band-Pass-Filter 32 definierten Wellenlänge passieren lässt.

Anschließend trifft die Wärmestrahlung 28 auf einen polarisierenden Strahlteiler 34, der die Wärmestrahlung in eine erste Strahlungskomponente 28a mit einer ersten Polarisation und eine zweite Strahlungskomponente 28b mit einer von der ersten Polarisation verschiedenen, zweiten Polarisation aufspaltet. In der bevorzugten Ausführungsform von Fig. 1 werden die beiden Strahlungskomponenten 28a, 28b jeweils über eine erste Abbildungsoptik 36a bzw. eine zweite Abbildungsoptik 36b auf eine erste Kamera 38a (insbesondere eine Matrix-Kamera) bzw. eine entsprechende zweite Kamera 38b abgebildet, wobei vorzugsweise jedes Flächenelement oder zumindest eine Vielzahl der Flächenelemente des Bearbeitungsbereichs 24 (also zumindest ein Ausschnitt des Bearbeitungsbereichs) scharf auf einer jeweiligen Bildebene der entsprechenden Kamera abgebildet werden. Die von den Kameras 38a, 38b erfassten Bilddaten werden insbesondere als erster und zweiter Bilddatensatz über entsprechende Datenleitungen 40a, 40b an ein Analysesystem 42 der Vorrichtung 10 übertragen, wo sie entsprechen ausgewertet werden.

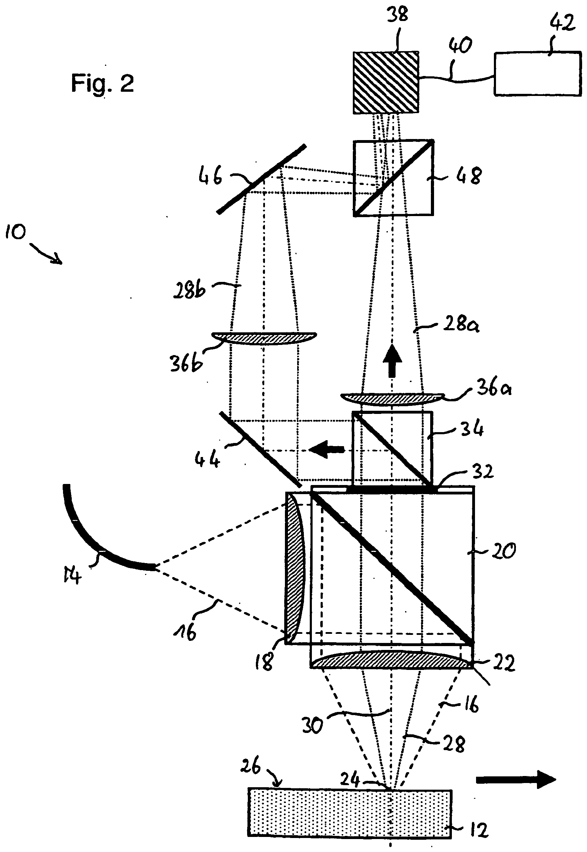

Fig. 2 zeigt eine schematische Darstellung einer Vorrichtung 10 zur Überwachung einer Laserbearbeitung eines Werkstücks 12 gemäß einer weiteren bevorzugten Ausführungsform der Erfindung. Dabei sind analoge Komponenten zur Ausführungsform von Fig. 1 mit den gleichen Bezugszeichen versehen. Diesbezüglich wird auf die entsprechende Beschreibung der Ausführungsform von Fig. 1 verwiesen. Der wesentliche Unterschied zur Ausführungsform von Fig. 1 ist, dass in der bevorzugten Ausführungsform von Fig. 2 die zweite Strahlkomponente 28b über einen ersten Umlenkspiegel 44, einen zweiten Umlenkspiegel 46 und einen zweiten polarisierenden Strahlteiler 48 in eine gemeinsame Kamera 38 gelenkt wird, während die erste polarisierte Strahlungskomponente 28a den zweiten polarisierenden Strahlteiler 48 durchdringt, um in dieselbe Kamera 38 gelenkt zu werden. Dabei können die beiden Abbildungen in der Kamera 38 beispielsweise nebeneinander auf dem Kamerachip abgebildet und erfasst werden. In diesem Fall ist nur eine Kamera erforderlich. Vorzugsweise wird der erfasste Bilddatensatz über eine Datenleitung 40 wiederum an das Analysesystem 42 übertragen. Dieses ist vorzugsweise ausgelegt, die beiden Abbildungen der beiden Strahlungskomponenten aus dem kombinierten Bilddatensatz zu separieren.

Wie nachfolgend beschrieben, macht sich die Erfindung insbesondere die unterschiedlichen Winkelabhängigkeiten von Wärmestrahlung für verschiedene Polarisationen zunutzte. Jeder Körper mit einer Temperatur über dem absoluten Nullpunkt emittiert elektromagnetische Strahlung, die thermische Strahlung oder Wärmestrahlung. Zusätzlich zur wachsenden Intensität der Strahlung mit steigender Temperatur verschiebt sich auch die spektrale Verteilung zu kürzeren Wellenlängen. Die spektrale Strahlungsdichte eines Scharzkörperstrahlers $L_{\lambda,B}(\lambda,T)$ bei einer Temperatur $T$ und einer Wellenlänge $\lambda$ kann durch das Planck'sche Gesetz beschrieben werden:

$$L_{\lambda,B}(\lambda,T) = \frac{c_1}{\pi \cdot \lambda^5} \cdot \frac{1}{e^{\frac{c_2}{\lambda \cdot T}} - 1}$$

Dabei sind $c_1$ und $c_2$ die zwei Planck'schen Strahlungskonstanten

$$c_1 = 2\pi \cdot h \cdot c^2 = 3{,}7415 \cdot 10^{-16} Wm^2$$

$$c_2 = \frac{h \cdot c}{k} = 1{,}438 \cdot 10^{-2} mK$$

wobei $h$ die Plarick'sche Konstante, c die Vakuumlichtgeschwindigkeit und k die Boltzmann-Konstante ist.

Ein sogenannter Schwarzer Körper bezeichnet eine ideale Oberfläche, die das gesamte eintreffende Licht unabhängig von der Wellenlänge und der Strahlungsrichtung absorbiert. In gleicher Weise ist in einem Scharzkörperstrahler die ausgesandte Strahlung unabhängig von der Strahlungsrichtung. Das Verhältnis zwischen der Strahlungsdichte einer realen Oberfläche und der eines Schwarzkörperstrahlers wird durch die spektrale Emissivität $\varepsilon(\lambda,T,\beta,surf.,mat.)$ (also das Emissionsvermögen bzw. den Emissionskoeffizienten) zum Ausdruck gebracht. Diese hängt vom Strahlungswinkel $\beta$ (auch als Abstrahlwinkel bezeichnet), Oberflächenbedingungen (*surf.*) wie Rauhigkeit oder Oxidation und dem Material (*mat.*) ab. Graue Strahler bilden eine Sonderstellung, da ihre spektrale Emissivität (also der Emissionskoeffizient) nicht von der Wellenlänge abhängt ($\varepsilon(\lambda)$=*const.*). Alle anderen realen Strahler (wie z.B. Metalle) weisen eine Wellenlängenabhängigkeit auf, wodurch bei der Nutzung einer Messung der Strahungsdichte für die Bestimmung der Temperatur eines Werkstückes ein genauer Rückschluss auf die Temperatur aus der Messung der Strahlungsdichte für lediglich eine Wellenlänge (Ein-Wellenlängen-Pyrometer) oft nicht möglich ist. Um das Problem der unbekannten Emissivität zu lösen, kann die spektrale Strahlungsdichte für zwei verschiedene Wellenlängen gemessen werden und daraus der Quotient Q gebildet werden:

$$Q = \frac{L_{\lambda_1}(\lambda_1,T)}{L_{\lambda_2}(\lambda_2,T)} = \frac{\varepsilon_1(\lambda_1,T)}{\varepsilon_2(\lambda_2,T)} \cdot \frac{\lambda_2^{\,5}}{\lambda_1^{\,5}} \cdot \frac{e^{\frac{c_2}{\lambda_2 \cdot T}} - 1}{e^{\frac{c_2}{\lambda_1 \cdot T}} - 1}$$

Unter der Annahme, dass der Emissionskoeffizient $\varepsilon$ für beide Wellenlängen gleich ist (grauer Strahler), hängt der Quotient der spektralen Strahlungsdichte nur von der Temperatur T ab. Allerdings ist der Emissionskoeffizient $\varepsilon$ für reale Strahler bei verschiedenen Wellenlängen in der Regel nicht konstant. Vorzugsweise wird die Abhängigkeit des Emissionskoeffizienten von der Wellenlänge bei konstanter Temperatur durch einen linearen Zusammenhang genähert:

$$\varepsilon(\lambda) = m \cdot \lambda + b$$

Durch eine Messung bei sogar drei verschiedenen Wellenlängen kann der unbekannte Emissionskoeffizient $\varepsilon$ in der obigen Formel für dien Quotienten Q durch diesen linearen Zusammenhang ersetzt werden. Dies führt zu drei Gleichungen mit den drei Variablen $T$, $m$ und $b$. Bei einer Messung von nur zwei verschiedenen Wellenlängen muss eine Annahme für zumindest eine dieser Variablen getroffen werden. Allerdings berücksichtigt diese Vorgehensweise noch nicht die Abhängigkeit des Emissionskoeffizienten vom Abstrahlwinkel, weshalb eine Temperaturmessung diesbezüglich immer noch mit entsprechenden Unsicherheiten bzw. Ungenauigkeiten verbunden bleibt.

Die vorliegende Erfindung nutzt insbesondere eine ganz andere Eigenschaft des Emissionskoeffizienten $\varepsilon$, um damit in sehr zuverlässiger Weise thermische Bearbeitungsprozesse, welche insbesondere zumindest temporär die Oberflächenstruktur von Werkstücken verändern bzw. beeinflussen, zu überwachen bzw. zu kontrollieren. So schlägt die Erfindung insbesondere vor, die thermische Strahlung zumindest eines Teils eines Bearbeitungsbereiches eines Werkstückes für zwei verschiedene Polarisationen zu erfassen. Ein Vergleich der erfassten Strahlung für die beiden unterschiedlichen Polarisationen erlaubt dann Rückschlüsse auf die Oberflächenstruktur des Werkstückes. Insbesondere nutzt die Erfindung dabei die unterschiedliche Winkelabhängigkeit verschiedener Polarisationen der Wärmestrahlung.

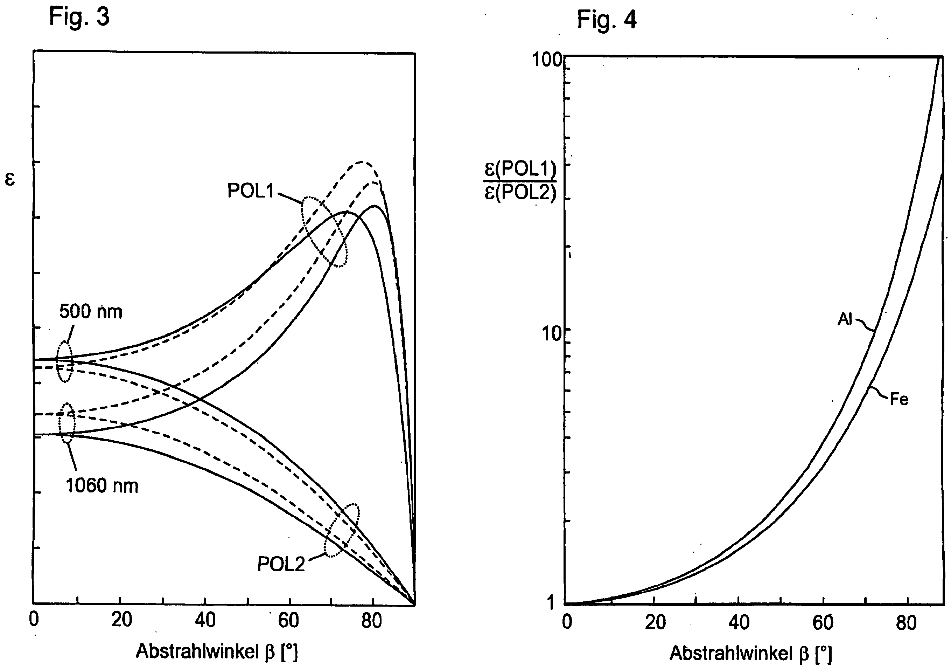

Fig. 3 demonstriert die Winkelabhängigkeit des Emissionskoeffizienten von Stahl für verschiedene Polarisationen bei zwei verschiedenen Wellenlängen und Temperaturen. Insbesondere repräsentieren die gestrichelten Linien den Emissionskoeffizienten bei einer Temperatur von etwa 300 K, während die durchgezogenen Linien den Emissionskoeffizienten bei einer Temperatur von etwa 1800 K darstellen. Außerdem ist die Winkelabhängigkeit des Emissionskoeffizienten für verschiedene Wellenlängen von 500 nm und 1060 nm dargestellt. Besonders deutlich wird aus Fig. 3 aber die unterschiedliche Winkelabhängigkeit des Emissionskoeffizienten von der Polarisation. Insbesondere ist zu erkennen, dass der Einfluss der Polarisation auf die Winkelabhängigkeit deutlich größer ist als der Einfluss der Temperatur und der Wellenlänge in dem dargestellten Bereich. Der Einfluss der Temperatur und der Wellenlänge auf die Winkelabhängigkeit kann also vorzugsweise gegenüber dem Einfluss der Polarisation vernachlässigt werden.

Die in Fig. 3 miteinander verglichenen Polarisationen entsprechen insbesondere zwei senkrecht zueinander orientierten linearen Polarisationen. Dabei entspricht die erste Polarisation POL1 einer parallelen Polarisation und die zweite Polarisation POL2 einer senkrechten Polarisation. Der Abstrahlwinkel $\beta$ entspricht dabei dem Winkel zwischen der Abstrahlrichtung und der Flächennormalen der emittierenden Fläche. In der parallelen Polarisation POL1 liegt der elektrische Feldvektor der Strahlung in einer Ebene, die von der Flächennormalen und der Abstrahlrichtung aufgespannt wird. In der senkrechten Polarisation POL2 liegt der elektrische Feldvektor der Strahlung senkrecht zu dieser Ebene.

Durch einen Vergleich der erfassten Wärmestrahlung mit den beiden verschiedenen Polarisationen lässt sich auf die Neigung der abstrahlenden Fläche, also insbesondere auf die lokale Neigung der Oberfläche des Werkstückes im Bearbeitungsbereich, insbesondere während der Bearbeitung schließen. Als Maß für die Flächenneigung kann dabei eine von den beiden erfassten Abstrahlungen abgeleitete Größe, wie z.B. die Differenz oder der Quotient der erfassten Abstrahlungen für die beiden Polarisationen ermittelt werden. Für die In Fig. 3 gezeigte Ausführungsform ergeben sich bei der Auswertung der Differenz der erfassten Abstrahlungen für jeden Wert der Differenz zwei mögliche Werte für den Abstrahlwinkel, weshalb in diesem Fall die Winkelbestimmung unter Umständen nicht eindeutig ist. Für die Erkennung von Fehlern im Bearbeitungsprozess ist allerdings die eindeutige Winkelbestimmung in der Regel auch nicht erforderlich. Dennoch ist es in der gezeigten Ausführungsform von Fig. 3 zumindest dann, wenn eine Winkelbestimmung erwünscht ist, beispielsweise vorteilhafter den Quotient anstelle der Differenz der erfassten Abstrahlungen zu berücksichtigen.

Fig.4 veranschaulicht die Winkelabhängigkeit des Quotienten des Emissionskoeffizienten der parallelen zur senkrechten Polarisation für Aluminium (Al) und Stahl (Fe) bei einer Temperatur von etwa 1800 K und einer Wellenlänge von etwa 1060 nm. Im Vergleich zu Stahl ist der Emissionskoeffizient von Aluminium geringer. Allerdings ist bei Aluminium sowohl der Unterschied zwischen vertikaler Abstrahlung (0°) und flacher Abstrahlung (nahe 90°) ebenso wie der Unterschied zwischen paralleler und senkrechter Polarisation größer, weshalb der in Fig. 4 dargestellte Quotient für Aluminium noch deutlicher vom Abstrahlwinkel abhängt als für Stahl.

Vor allem Oberflächenstrukturen mit Abstrahlwinkeln $\beta > 40°$, wie sie bei Strukturfehlern in Form von Löchern, Poren, Kerben, Schnitten, Rissen und dergleichen regelmäßig auftreten, können damit sehr zuverlässig aus den erfassten Abstrahlungen mit den beiden Polarisationen abgeleitet und damit detektiert werden.

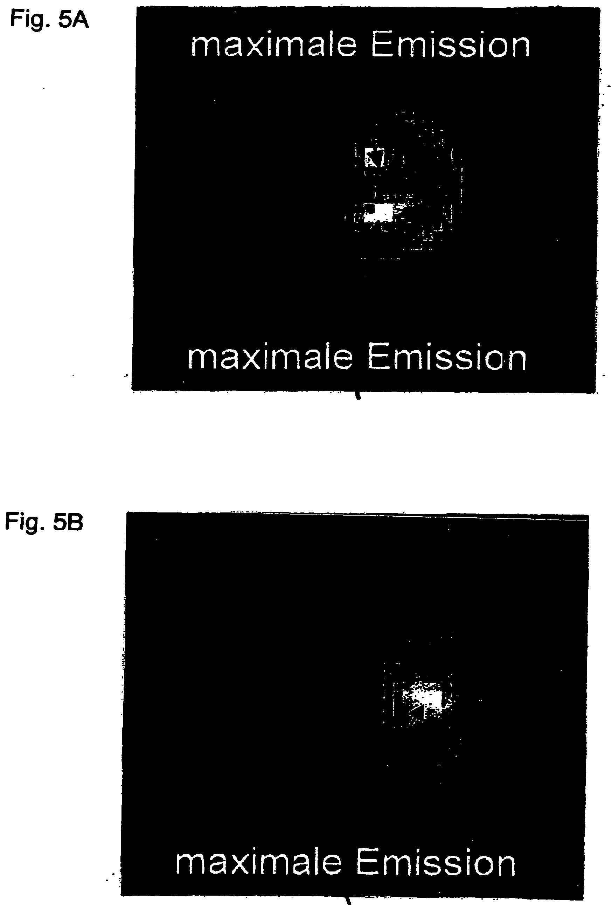

In Fig. 5A und 5B sind ortsaufgelöste Bilddatensätze für zwei Strahlungskomponenten unterschiedlicher Polarisation dargestellt. Insbesondere handelt es sich hierbei um eine Überwachung eines Laserbearbeitungsprozesses, bei dem ein Laserstrahl relativ zum Werkstück in eine erste Bewegungsrichtung bewegt wird. In den Darstellungen von Fig. 5A und 5B entspricht dies der Richtung nach rechts. Die beiden Strahlungskomponenten sind dabei orthogonal zueinander jeweils linear polarisiert. Die Polarisation der in Fig. 5A dargestellten Strahlungskomponente ist dabei senkrecht zur ersten Bewegungsrichtung, während die Polarisation der in Fig. 5B dargestellte Strahlungskomponente parallel zur Bewegungsrichtung liegt. Dabei ist in beiden Bilddatensätzen deutlich die durch den Laserbearbeitungsprozess entstehende, sich in das Werkstück hinein erstreckende Kapillare in der Draufsicht zu erkennen. Aufgrund der Vorwärtsbewegung des Laserstrahls neigt sich die Kapillare zur Werkstückoberfläche hin nach vorne. Die Seitenwände der Kapillare weisen daher einen kontinuierlichen Übergang verschiedener Neigungswinkel relativ zur Einstrahlrichtung auf. Diese unterschiedlichen Neigungswinkel spiegeln sich in der unterschiedlichen Intensität der beiden Strahlungskomponenten wider. Während in der senkrechten Polarisation die seitlichen Flanken der Kapillare besonders intensiv erscheinen, erscheint in der parallelen Polarisation die vordere Flanke besonders intensiv. Damit lässt sich als die Oberflächenstruktur, insbesondere ein Neigungswinkel oder dessen unerwünschte Änderung während eines Bearbeitungsprozesses lokal sehr gut überwachen.

## Bezugszeichenliste

| | |
|---|---|
| 10 | Vorrichtung zur Überwachung einer Laserbehandlung |
| 12 | Werkstück |
| 14 | optische Faser, Glasfaser |
| 16 | Laserstrahl |
| 18 | Kollimatorlinse |
| 20 | Strahlteiler |
| 22 | Fokussierlinse |
| 24 | Bearbeitungsbereich |
| 26 | Werkstückoberfläche |
| 28 | thermische Strahlung, Wärmestrahlung |
| 28a | thermische Strahlung mit erster Polarisation (erste Strahlungskomponente) |
| 28b | thermische Strahlung mit zweiter Polarisation (zweite Strahlungskomponente) |
| 30 | optische Achse |
| 32 | Band-Pass-Filter |
| 34 | erster polarisierender Strahlteiler |
| 36a | erste Abbildungsoptik |
| 36b | zweite Abbildungsoptik |
| 38 | Kamera |
| 38a | erste Kamera |
| 38b | zweite Kamera |
| 40, 40a, 40b | Datenleitungen |
| 42 | Analysesystem |
| 44 | erster Umlenkspiegel |
| 46 | zweiter Umlenkspeigel |
| 48 | zweiter polarisierender Strahlteiler |

## Patentansprüche

1. Verfahren zur Überwachung oder Überprüfung einer Bearbeitung eines Werkstücks (12), umfassend:

   - Erfassen einer ersten Strahlungskomponente (28a) einer von zumindest einem Flächenelement in einem Bearbeitungsbereich (24) des Werkstückes (12) emittierten Wärmestrahlung (28) mit einer ersten Polarisation der Wärmestrahlung (28);
   - Erfassen einer zweiten Strahlungskomponente (28) einer von dem zumindest einen Flächenelement in dem Bearbeitungsbereich (24) des Werkstückes (12) emittierten Wärmestrahlung (28) mit einer von der ersten verschiedenen, zweiten Polarisation der Wärmestrahlung (28); und
   - Ermitteln von Datenwerten einer Oberflächenstruktur des Werkstückes an dem zumindest einen Flächenelement aus der erfassten ersten und zweiten Strahlungskomponente.

2. Verfahren nach Anspruch 1, wobei das Ermitteln von Datenwerten einer Oberflächenstruktur des Werkstückes ein Bestimmen einer Differenz und/oder eines Quotienten von erfassten Werten der ersten und zweiten Strahlungskomponente (28a, 28b) umfasst.

3. Verfahren nach Anspruch 1 oder 2, wobei die erste und/oder die zweite optische Polarisation eine lineare Polarisation ist.

4. Verfahren nach einem der vorangegangenen Ansprüche, wobei das Erfassen der ersten und zweiten Strahlungskomponente (28a, 28b) für eine Vielzahl von Flächenelementen im Bearbeitungsbereich ortsaufgelöst erfolgt.

5. Verfahren nach Anspruch 4, wobei das Ermitteln von Datenwerten einer Oberflächenstruktur des Werkstückes ein Überprüfen des Überschreitens einer durch die Sollvorgaben bestimmten räumlichen Veränderung für zumindest eine Beziehung der ersten und zweiten Strahlungskomponente (28a, 28b) umfasst.

6. Verfahren nach einem der vorangegangenen Ansprüche, welches außerdem ein Bestrahlen des Werkstücks mit Laserlicht zur Bearbeitung des Werkstücks im Bearbeitungsbereich umfasst, wobei die erste und zweite Strahlungskomponente (28a, 28b) derart erfasst werden, dass sie koaxial zum eingestrahlten Laserlicht vom Bearbeitungsbereich (24) abgestrahlt werden.

7. Verfahren nach einem der vorangegangenen Ansprüche, wobei die Bearbeitung des Werkstücks eine Laserbearbeitung umfasst und die Laserbearbeitung eine Bewegung eines Laserstrahls relativ zum Werkstück (12) in einer ersten Bewegungsrichtung umfasst, und wobei die erste optische Polarisation parallel zur ersten Bewegungsrichtung und die zweite optische Polarisation senkrecht zur ersten Bewegungsrichtung liegt.

8. Verfahren nach einem der vorangegangenen Ansprüche, wobei

   - die Bearbeitung des Werkstücks eine Laserbearbeitung umfasst und eine dabei verwendete Laser-Wellenlänge in einem Bereich von etwa 100 nm bis etwa 1 μm, vorzugsweise in einem Bereich von etwa 300 nm bis etwa 11 μm liegt; und
   - die erfassten Strahlungskomponenten (28a, 28b) für zumindest eine Wellenlänge in einem Bereich von etwa 300 nm bis etwa 12 μm, vorzugsweise in einem Bereich von etwa 300 nm bis etwa 5 μm, noch mehr bevorzugt in einem Bereich von etwa 1 μm bis etwa 3 μm liegen.

9. Verfahren nach einem der vorangegangenen Ansprüche, wobei das Ermitteln von Datenwerten einer Oberflächenstruktur ein Ermitteln eines Abstrahlwinkels der erfassten Strahlungskomponenten in dem zumindest einen Flächenelement umfasst, wobei für das zumindest eine Flächenelement des Werkstückes Strahlungskomponenten bei zumindest zwei verschiedenen Wellenlängen erfasst werden, und wobei das Verfahren außerdem umfasst:

   - Ermitteln einer Temperatur und/oder eines Emissionskoeffizienten für das zumindest eine Flächenelement aus den bei zumindest zwei verschiedenen Wellenlängen erfassten Strahlungskomponenten unter Berücksichtigung des ermittelten Abstrahlwinkels.

10. Vorrichtung zur Überwachung einer Bearbeitung eines Werkstücks, umfassend:

    - ein Detektorsystem (38) zur separaten Erfassung einer ersten Strahlungskomponente einer von zumindest einem Flächenelement in einem Bearbeitungsbereich des Werkstückes emittierten Wärmestrahlung mit einer ersten Polarisation der Wärmestrahlung und einer zweiten Strahlungskomponente einer von dem zumindest einen Flächenelement in dem Bearbeitungsbereich des Werkstückes emittierten Wärmestrahlung mit einer von der ersten verschiedenen, zweiten Polarisation der Wärmestrahlung; und
    - ein Analysesystem (42) zum Ermitteln von Datenwerten einer Oberflächenstruktur des Werkstücks an dem zumindest einen Flächenelement aus der erfassten ersten und zweiten Strahlungskomponente.

11. Vorrichtung nach Anspruch 10, außerdem umfassend eine Einkoppeloptik (20) zum Einkoppeln eines Laserstrahls für die Bearbeitung des Werkstückes in den Strahlengang des Detektorsystems derart, dass der Laserstrahl koaxial mit den vom Werkstück abgestrahlten und vom Detektorsystem erfassten Komponenten der Wärmestrahlung auf das Werkstück trifft.

12. Vorrichtung nach Anspruch 10 oder 11, wobei das Detektorsystem zumindest einen ersten Bandpassfilter und/oder einen polarisierenden Strahlteiler (34, 48) umfasst.

13. Vorrichtung nach einem der Ansprüche 10 bis 12, wobei das Detektorsystem

    - zumindest eine Matrix-Kamera (38a, 38b) umfasst, welche ausgelegt ist, die erste und/oder zweite Strahlungskomponente für eine Vielzahl von Flächenelementen im Bearbeitungsbereich ortsaufgelöst zu erfassen; und/oder
- einen Polarisationsfilter umfasst, der zwischen den zumindest zwei verschiedenen Polarisationen umschaltbar ist.

14. Vorrichtung nach einem der Ansprüche 10 bis 13, wobei das Analysesystem (42) einen Datenspeicher zum Speichern von Sollvorgaben umfasst, welche Sollwerte für zumindest eine Beziehung der ersten und zweiten Strahlungskomponente festlegt, und wobei das Analysesystem ausgelegt ist, das Auftreten von Abweichungen der erfassten Wärmestrahlung von den Sollvorgaben zu überprüfen.

15. Vorrichtung nach einem der Ansprüche 10 bis 14, wobei das Analysesystem (42) ausgelegt ist, aus der erfassten ersten und zweiten Strahlungskomponente einen Abstrahlwinkel der erfassten Strahlungskomponenten in dem zumindest einen Flächenelement zu ermitteln, wobei das Detektorsystem ausgelegt ist, für das zumindest eine Flächenelement des Werkstückes Strahlungskomponenten bei zumindest zwei verschiedenen Wellenlängen zu erfassen, und wobei das Analysesystem außerdem ausgelegt ist, aus den bei zumindest zwei verschiedenen Wellenlängen erfassen Strahlungskomponenten unter Berücksichtigung des ermittelten Abstrahlwinkels eine Temperatur und/oder einen Emissionskoeffizient für das zumindest eine Flächenelement zu ermitteln.

**Claims**

1. Method for monitoring or checking the processing of a workpiece (12), comprising:

   - detecting a first radiation component (28a) of a thermal radiation (28) emitted from at least one surface element in a processing area (24) of the workpiece (12) with a first polarization of the thermal radiation (28),
   - detecting a second radiation component (28b) of a thermal radiation (28) emitted from the at least one surface element in the processing area (24) of the workpiece (12) with a second polarization of the thermal radiation (28) different from the first polarization, and
   - identifying data values of a surface structure of the workpiece at the at least one surface element from the detected first and second radiation components.

2. The method according to claim 1, wherein the identification of data values of a surface structure of the workpiece includes the determination of a difference and/or a quotient of detected values of the first and second radiation components (28a, 28b).

3. The method according to claim 1 or 2, wherein the first and/or the second optical polarization is a linear polarization.

4. The method according to any one of the preceding claims, wherein the detection of the first and second radiation components (28a, 28b) is carried out in a space-resolved manner for a plurality of surface elements in the processing area.

5. The method according to claim 4, wherein the identification of data values of a surface structure of the workpiece comprises a check of the exceedance of a spatial alteration for at least one relation of the first and second radiation components (28a, 28b) determined by the target specification.

6. The method according to any one of the preceding claims, further comprising an irradiation of the workpiece with laser light for processing the workpiece in the processing area, wherein the first and second radiation components (28a, 28b) are detected such that they are radiated from the processing area (24) coaxially to the irradiated laser light.

7. The method according to any one of the preceding claims, wherein the processing of the workpiece comprises a laser processing and the laser processing comprises a movement of a laser beam relative to the workpiece (12) in a first direction of movement, and wherein the first optical polarization is parallel to the first direction of movement and the second optical polarization is orthogonal to the first direction of movement.

8. The method according to any one of the preceding claims, wherein

   - the processing of the workpiece comprises a laser processing and a laser wavelength used in the processing is in a range of about 100 nm to about 11 $\mu$m, preferably in a range of about 300 nm to about 11 $\mu$m, and
   - the detected radiation components (28a, 28b) for at least one wavelength are in a range of about 300 nm to about 12 $\mu$m, preferably in a range of about 300 nm to about 5 $\mu$m, more preferably in a range of about 1 $\mu$m to about 3 $\mu$m.

9. The method according to any one of the preceding claims, wherein the identification of data values of a surface structure comprises an identification of an angle of radiation of the detected radiation components in the at least one surface element, wherein radiation components are detected at at least two different wavelengths for the at least one surface element of the workpiece, and wherein the method further comprises:

- identifying a temperature and/or an emission coefficient for the at least one surface element from the radiation components detected at at least two different wavelengths considering the identified angle of radiation.

10. Device for monitoring the processing of a workpiece, comprising:

- a detector system (38) for separately detecting a first radiation component of a thermal radiation emitted from at least one surface element in a processing area of the workpiece with a first polarization of the thermal radiation and a second radiation component of a thermal radiation emitted from the at least one surface element in the processing area of the workpiece with a second polarization of the thermal radiation different from the first polarization, and
- an analysis system (42) for identifying data values of a surface structure of the workpiece at the at least one surface element from the detected first and second radiation components.

11. The device according to claim 10, further comprising an injecting optics (20) for injecting a laser beam for the processing of the workpiece in the optical path of the detector system such that the laser beam impacts on the workpiece coaxially to the components of the thermal radiation radiated from the workpiece and detected by the detector system.

12. The device according to claim 10 or 11, wherein the detector system comprises at least one first bandpass filter and/or a polarizing beam splitter (34, 48).

13. The device according to any one of claims 10 to 12, wherein the detector system

- comprises at least one matrix camera (38a, 38b) configured to detect the first and/or second radiation component for a plurality of surface elements in the processing area in a space-resolved manner, and/or
- comprises a polarizing filter, which can be switched between the at least two different polarizations.

14. The device according to any one of claims 10 to 13, wherein the analysis system (42) includes a data memory for storing target specifications, which define target values for at least one relation of the first and second radiation components, and wherein the analysis system is configured to check the occurrence of deviations of the detected thermal radiation from the target specifications.

15. The device according to any one of claims 10 to 14, wherein the analysis system (42) is configured to identify an angle of radiation of the detected radiation components in the at least one surface element from the detected first and second radiation components, wherein the detector system is configured to detect radiation components at at least two different wavelengths for the at least one surface element of the workpiece, and wherein the analysis system is further configured to identify a temperature and/or an emission coefficient for the at least one surface element from the radiation components detected at at least two different wavelengths considering the identified radiation angle.

**Revendications**

1. Procédé de surveillance ou de vérification d'un usinage d'une pièce (12) comprenant :

- détection d'une première composante de rayonnement (28a) d'un rayonnement thermique (28) émis par au moins un élément plan dans une région d'usinage (24) de la pièce (12) avec une première polarisation du rayonnement thermique (28) ;
- détection d'une seconde composante de rayonnement (28b) d'un rayonnement thermique (28) émis par l'au moins un élément plan dans la région d'usinage (24) de la pièce (12) avec une seconde polarisation du rayonnement thermique (28) différente de la première ; et
- détermination de valeurs de données d'une structure superficielle de la pièce sur l'au moins un élément plan à partir des première et seconde composantes de rayonnement détectées.

2. Procédé selon la revendication 1, dans lequel la détermination de valeurs de données d'une structure superficielle de la pièce comprend une définition d'une différence et/ou d'un quotient de valeurs détectées des première et seconde composantes de rayonnement (28a, 28b).

3. Procédé selon la revendication 1 ou 2, dans lequel la première et/ou la seconde polarisation optique est une polarisation linéaire.

4. Procédé selon une des revendications précédentes, dans lequel la détection des première et seconde composantes de rayonnement (28a, 28b) s'effectue de manière résolue dans l'espace pour une pluralité d'éléments plans dans la région d'usinage.

5. Procédé selon la revendication 4, dans lequel la détermination de valeurs de données d'une structure superficielle de la pièce comprend une vérification du dépassement d'une modification spatiale définie par les paramètres de consigne pour au moins un rapport des première et seconde composantes de rayonnement (28a, 28b).

6. Procédé selon une des revendications précédentes, qui comprend en outre une irradiation de la pièce avec de la lumière laser pour l'usinage de la pièce dans la région d'usinage, dans lequel les première et seconde composantes de rayonnement (28a, 28b) sont détectées de telle sorte qu'elles sont rayonnées de manière coaxiale à la lumière laser irradiée par la région d'usinage (24).

7. Procédé selon une des revendications précédentes, dans lequel l'usinage de la pièce comprend un usinage laser et l'usinage laser comprend un mouvement d'un rayon laser par rapport à la pièce (12) dans une première direction de mouvement, et dans lequel la première polarisation optique se situe parallèlement à la première direction de mouvement et la seconde polarisation optique perpendiculairement à la première direction de mouvement.

8. Procédé selon une des revendications précédentes, dans lequel

 - l'usinage de la pièce comprend un usinage laser et une longueur d'onde laser utilisée ce faisant se situe dans une plage d'environ 100 nm à environ 11 $\mu$m, de préférence dans une plage d'environ 300 nm à environ 11 $\mu$m ; et
 - les composantes de rayonnement détectées (28a, 28b) se situent pour au moins une longueur d'onde dans une plage d'environ 300 nm à environ 12 $\mu$m, de préférence dans une plage d'environ 300 nm à environ 5 $\mu$m, de manière encore plus préférée dans une plage d'environ 1 $\mu$m à environ 3 $\mu$m.

9. Procédé selon une des revendications précédentes, dans lequel la détermination de valeurs de données d'une structure superficielle comprend une détermination d'un angle de rayonnement des composantes de rayonnement détectées dans l'au moins un élément plan, dans lequel des composantes de rayonnement sont détectées pour l'au moins un élément plan de la pièce à au moins deux longueurs d'onde différentes, et dans lequel le procédé comprend en outre :

 - détermination d'une température et/ou d'un coefficient d'émission pour l'au moins un élément plan à partir des composantes de rayonnement détectées à au moins deux longueurs d'onde différentes en tenant compte de l'angle de rayonnement déterminé.

10. Dispositif de surveillance d'un usinage d'une pièce comprenant :

 - un système de détecteur (38) pour la détection séparée d'une première composante de rayonnement d'un rayonnement thermique émis par au moins un élément plan dans une région d'usinage de la pièce avec une première polarisation du rayonnement thermique et d'une seconde composante de rayonnement d'un rayonnement thermique émis par l'au moins un élément plan dans la région d'usinage de la pièce avec une seconde polarisation du rayonnement thermique différente de la première ; et
 - un système d'analyse (42) pour la détermination de valeurs de données d'une structure superficielle de la pièce sur l'au moins un élément plan à partir des première et seconde composantes de rayonnement détectées.

11. Dispositif selon la revendication 10, comprenant en outre une optique d'injection (20) pour l'injection d'un rayon laser pour l'usinage de la pièce dans la trajectoire des rayons du système de détecteur de telle sorte que le rayon laser frappe la pièce de manière coaxiale avec les composantes du rayonnement thermique rayonnées par la pièce et détectées par le système de détecteur.

12. Dispositif selon la revendication 10 ou 11, dans lequel le système de détecteur comprend au moins un premier filtre passe-bande et/ou un séparateur de faisceaux polarisant (34, 48).

13. Dispositif selon une des revendications 10 à 12, dans lequel le système de détecteur

 - comprend au moins une caméra matricielle (38a, 38b) qui est conçue pour détecter la première et/ou seconde composante de rayonnement de manière résolue dans l'espace pour une pluralité d'éléments plans dans la région d'usinage ; et/ou
 - comprend un filtre de polarisation qui peut être commuté entre les au moins deux polarisations différentes.

14. Dispositif selon une des revendications 10 à 13, dans lequel le système d'analyse (42) comprend une mémoire de données pour la mémorisation de paramètres de consigne qui définissent des valeurs de consigne pour au moins un rapport des première et seconde composantes de rayonnement, et dans lequel le système d'analyse est conçu pour vérifier la survenue d'écarts du rayonnement thermique détecté des paramètres de consigne.

**15.** Dispositif selon une des revendications 10 à 14, dans lequel le système d'analyse (42) est conçu pour déterminer à partir des première et seconde composantes de rayonnement détectées un angle de rayonnement des composantes de rayonnement détectées dans l'au moins un élément plan, dans lequel le système de détecteur est conçu pour détecter pour l'au moins un élément plan de la pièce des composantes de rayonnement à au moins deux longueurs d'onde différentes, et dans lequel le système d'analyse est en outre conçu pour déterminer à partir des composantes de rayonnement détectées à au moins deux longueurs d'onde différentes une température et/ou un coefficient d'émission pour l'au moins un élément plan en tenant compte de l'angle de rayonnement déterminé.

**Fig. 1**

**Fig. 2**

Fig. 4

Fig. 3

Fig. 5A

maximale Emission

maximale Emission

Fig. 5B

maximale Emission

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008028580 A